Europäisches Patentamt

European Patent Office

Office européen des brevets

(19)

(11) **EP 1 032 139 A2**

(12) **EUROPÄISCHE PATENTANMELDUNG**

(43) Veröffentlichungstag:
    **30.08.2000   Patentblatt 2000/35**

(51) Int Cl.⁷: **H04B 1/707**

(21) Anmeldenummer: **99810720.5**

(22) Anmeldetag: **13.08.1999**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(30) Priorität: **13.08.1998   CH 166498**

(71) Anmelder: **Eidgenössische Technische
    Hochschule ( ETH) Zürich
    8092 Zürich (CH)**

(72) Erfinder: **Dahlhaus, Dirk Herbert
    8049 Zürich (CH)**

(54)   **Schätzung der Systemordnung in einem Funksystem mit Bandspreiztechnik**

(57)     In einem Verfahren zur Schätzung der Systemordnung in einem mit $\ell_{max} \geq K + 1$ Korrelatoren ausgerüsteten Empfänger eines Funksystems mit Bandspreiztechnik, in dem *K* logische Kanäle auf *K* physikalische Kanäle abgebildet werden, die mittels verschiedener Spreizcodes mit Phasenumtastung im Codevielfachzugriff auf ein gemeinsames Frequenzband zugreifen, in Form der iterativen Bestimmung (10, 11,16) eines Vektors

$$\hat{L} = \left[\hat{L}_1, \ldots, \hat{L}_K\right],$$

dessen *k*-te Komponente die Anzahl der relevanten Wellenausbreitungspfade für den *k*-ten Kanal angibt, erfolgen

(a) in einem Iterationsteilschritt $\mathcal{G}$ (L) (24) die Demodulation der Signale aller Kanäle unter Verwendung von *L* = [*L*₁,..., *L*ₖ] im Rahmen eines Mehrbenutzerverfahrens mit Subtraktion der Intersymbol- und Vielfachzugriffsinterferenz, die Schätzung der entsprechenden Bitfehlerraten

$$\hat{P}(L) = \left[\hat{P}_1, \ldots, \hat{P}_K\right]$$

innerhalb eines bestimmten Ausschnitts des Empfangssignals, der Vergleich von $\hat{P}(L)$ mit spezifizierten Bitfehlerraten und die Berechnung und Speicherung einer von *P*(L) abhängigen unteren Schranke *S*(L) für die Wahrscheinlichkeit, dass der Vektor der geschätzten Symbole aller Kanäle dem Vektor der tatsächlich übertragenen Symbole entspricht;
(b) ein Abbruch des Verfahrens in einem Iterationsteilschtitt $\mathcal{G}$ (L), sobald die spezifizierten Bitfehlerraten eingehalten werden, und die Schätzung der Systemordnung durch L = L ;
(c) in einem Iterationsschritt $\mathcal{H}$ (L) (37) eine Anzahl von Iterationsteilschritten

$$\left\{\mathcal{G}\left(\tilde{L}(1)\right), \ldots, \mathcal{G}\left(\tilde{L}(K)\right)\right\}$$

mit $\tilde{L}(k)$ = [*L*₁,...,*L*ₖ₋₁,*L*ₖ + 1, *L*ₖ₊₁,...,*L*ₖ] und der Vergleich von $\hat{S}(L)$ mit

$$\hat{S}\left(\tilde{L}(k)\right)$$

für *k* = 1,..., *K*;
(d) bei fehlendem Abbruch des Verfahrens in den Iterationsteilschritten

EP 1 032 139 A2

Printed by Jouve, 75001 PARIS (FR)

$$\left\{ \mathcal{G}\left(\tilde{L}\left(1\right)\right),\ldots,\mathcal{G}\left(\tilde{L}\left(K\right)\right)\right\}$$

ein Abbruch des Verfahrens im Iterationsschritt $\mathcal{H}$ ($L$), falls

$$\hat{S}\left(L\right) \geq \max_k \hat{S}\left(\tilde{L}\left(k\right)\right)$$

erfüllt ist, und die Schätzung der Systemordnung durch $\hat{L} = L$;
(e) in einer Iteration $\mathcal{I}$ ($L$) (16) ein Iterationsschritt $\mathcal{H}$ ($L$), die Aufdatierungen

$$L \;=\; \tilde{L}\left(\arg\max_k \left\{ \hat{S}\left(\tilde{L}\left(k\right)\right)\right\}\right) \;\; \text{und} \;\; \hat{S}\left(L\right) \;=\; \max_k \left\{ \hat{S}\left(\tilde{L}\left(k\right)\right)\right\}.$$

und der Vergleich von

$$\sum_{k=1}^{K} L_k$$

mit $\mathcal{L}_{\max}$;;
(f) bei fehlendem Abbruch des Verfahrens im Iterationsschritt $\mathcal{H}$ ($L$) ein Abbruch des Verfahrens in der Iteration $\mathcal{I}$ ($L$), falls

$$\sum_{k=1}^{K} L_k \;=\; \mathcal{L}_{\max}$$

erfüllt ist, und die Schätzung der Systemordnung durch $\hat{L} = L$;
(g) mit dem Startwert $L = [1,\ldots,1]$ der Iterationsteilschritt $\mathcal{G}$($L$) und, falls die Abbruchbedingung nicht erfüllt ist, eine Folge von Iterationen $\{\mathcal{I}(L)\}$, bis das Verfahren abbricht.

Abb. 1

**Beschreibung**

Die Erfindung betrifft ein Verfahren, mit dem ein Empfänger in einem Funksystem mit Bandspreiztechnik und Codevielfachzugriff die Anzahl relevanter Ausbreitungspfade in Umgebungen mit Mehrwegausbreitung schätzen kann.

Die Anzahl relevanter Ausbreitungspfade, auch als Systemordnung bezeichnet, wird in sogenannten ,,Rake″-Empfängern, die in Funksystemen mit ,,Code-Division Multiple Access″ (CDMA), wie z.B. gemäss dem amerikanischen Standard IS-95, zur Anwendung gelangen, als feste Grösse vorgegeben. Der Nachteil dieser Methode besteht einerseits darin, dass vorhandene Signalenergie zur Detektion der übertragenen Symbole nicht ausgenutzt wird, falls die Anzahl der relevanten Ausbreitungspfade die Anzahl der Korrelatoren des Rake-Empfängers übersteigt. Andererseits verschlechtert die Berücksichtigung von tatsächlich nicht vorhandenen Ausbreitungspfaden, wie etwa in einer Situation mit Sichtverbindung und ohne weitere wesentliche reflektierende Objekte, die Detektion aufgrund der Addition von Rauschtermen. In der Aufwärtsstrecke tritt zusätzlich das ,,Nah-Fern-Problem″ auf, welches zum Teil durch eine aufwendige Regelung der Sendeleistungen aller Kanäle reduziert werden kann. Die Übertragungsgüte des Gesamtsystems beim Einsatz eines Mehrbenutzerverfahrens hängt in hohem Mass von der Berücksichtigung der Signalanteile hoher Leistung und somit von der Schätzung der Systemordnung ab.

Die in [J. Joutsensalo, "A Subspace Method for Model Order Estimation in CDMA", *Proc. of the IEEE Fourth Int. Symp. on Spread Spectrum Techniques and Applications (ISSSTA '96),* Mainz, Deutschland, S. 79-85, Sept. 1996] beschriebene Methode zur Schätzung der Systemordnung ist lediglich in Situationen anwendbar, in denen die Mehrwegsignalanteile unkorrelierte Prozesse darstellen. Ferner besteht kein direkter Zusammenhang zwischen dem gewählten informationstheoretischen Kriterium zur Ordnungsschätzung und der Übertragungsgüte des Gesamtsystems. Das in [M. Wax und I. Ziskind, "Detection of the Number of Coherent Signals by the MDL Principle", *IEEE Trans. Acoust., Speech and Sig. Proc.,* Bd. 37, S. 1190-1196, Aug. 1989] beschriebene Verfahren ermöglicht die Ordnungsschätzung für den Fall korrelierter Signalanteile bei Verwendung einer Antennengruppe am Empfänger. Der Nachteil des Verfahrens besteht darin, dass die Anzahl der Antennen grösser als die Anzahl der Signalanteile sein muss, und wiederum kein direkter Zusammenhang zwischen der Schätzung und der Übertragungsgüte des Gesamtsystems herstellbar ist.

Aufgabe der Erfindung ist es daher, ein Verfahren zur Schätzung der Systemordnung zu entwickeln, welches die Eigenschaft besitzt, dass ein direkter Zusammenhang zwischen der Ordnungsschätzung und der Übertragungsgüte des Gesamtsystems besteht, wobei die Korrelationseigenschaften der Signalanteile bei Mehrwegeausbreitung berücksichtigt werden und bei Einsatz von Antennengruppen die Anzahl der erforderlichen Antennen von der Anzahl der Mehrwegkomponenten entkoppelt ist.

Diese Aufgabe wird erfindungsgemäss durch die kennzeichnenden Merkmale der Patentansprüche 1 und 2 gelöst.

Durch das nach Patentanspruch 1 vorgesehene Verfahren werden zumindest die folgenden Eigenschaften und Vorteile erzielt:

Das erfindungsgemässe Verfahren schätzt die Systemordnung durch iterative Maximierung einer geschätzten unteren Schranke für die Wahrscheinlichkeit, dass der Vektor der detektierten Symbole aller Kanäle dem Vektor der tatsächlich übertragenen Symbole entspricht, und beinhaltet daher einen direkten Zusammenhang zwischen der Ordnungsschätzung und der Übertragungsgüte des Gesamtsystems. Die Schranke wird als Funktion der Bitfehlerraten formuliert, was bei Vorliegen von Anforderungen an die Übertragungsgüte in Form spezifizierter Bitfehlerraten aller Kanäle den Vergleich zwischen geschätzten und spezifizierten Bitfehlerraten ermöglicht. Dieses Vorgehen hat den Vorteil, dass das iterative Verfahren abgebrochen werden kann, sobald die Spezifikationen erfüllt sind. Falls die Spezifikationen nicht eingehalten werden können, bricht das Verfahren ab, sobald ein lokales Maximum der Schranke erreicht wird oder, in Abwesenheit eines lokalen Maximums, die maximale Anzahl an Korrelatoren, die für die Demodulation zur Verfügung stehen, für einen maximalen Schrankenwert ausgeschöpft ist. Die Korrelationseigenschaften der Signalanteile können bei der Schätzung der Bitfehlerraten berücksichtigt werden, während die im Empfänger vorgenommene Subtraktion der Intersymbol- und Vielfachzugriffsinterferenz bei Einsatz von Antennengruppen die Anzahl der erforderlichen Antennen von der Anzahl der Mehrwegkomponenten entkoppelt.

Gemäss den kennzeichnenden Merkmalen des Patentanspruchs 2 eignet sich das erfindungsgemässe Verfahren unter Beibehaltung der Vorteile des Verfahrens gemäss Patentanspruch 1 für Funksysteme, in denen die Übertragungsgüte unabhängig von den spezifizierten Bitfehlerraten der einzelnen Kanäle maximiert werden soll.

Gemäss den kennzeichnenden Merkmalen des Patentanspruchs 3 werden die Bitfehlerraten für verschiedene Werte der bei der Demodulation verwendeten Systemordnung und gegebene Symbolwerte durch jeweils zwei Parameter, den Mittelwert und die Varianz der Entscheidungsvariablen, gekennzeichnet. Hieraus ergibt sich der Vorteil, dass die einzelnen Bitfehlerraten durch Schätzung von lediglich zwei reellen Grössen geschätzt werden können. Gemäss den kennzeichnenden Merkmalen des Patentanspruchs 4 werden die Vorteile der iterativen Schätzung der Funkkanalparameter durch den SAGE/Multistage-Algorithmus [D. Dahlhaus, A. Jarosch, B. Fleury und R. Heddergott, "Joint demodulation in DS/CDMA systems exploiting the space and time diversity of the mobile radio channel", in *Proc. of the 8th IEEE Int. Symp. on Personal, Indoor and Mobile Radio Communications (PIMRC '97),* Bd. 1, (Helsinki, Finnland), S. 47-52, Sept. 1997], die bei hinreichender Beobachtungslänge des Empfangssignals eine hohe Robustheit auch dann aufweist, falls die verwendete Systemordnung einige relevante Wellenausbreitungspfade nicht berücksichtigt, mit der vorteilhaften Eigenschaft kombiniert, dass die Bitfehlerraten aller Kanäle ohne Übertragung von Referenzsymbolen geschätzt werden können. Für steigende Anzahl der beobachteten Symbole erhöht sich dabei die Genauigkeit des geschätzten Störabstands.

Gemäss den kennzeichnenden Merkmalen der Patentansprüche 5 und 6 ergeben sich obere Schranken wie in Patentanspruch 1 gefordert als Funktion der Bitfehlerraten der einzelnen Kanäle, wobei die Schranke gemäss Patentanspruch 6 kleiner oder gleich der Schranke in Patentanspruch 5 ist.

**Kurzbeschreibung der Abbildungen**

Nachfolgend soll die Erfindung anhand von Ausführungsbeispielen und im Zusammenhang mit den Abbildungen näher erläutert werden. Es zeigen:

Abb. 1   ein Ablaufdiagramm des erfindungsgemässen Verfahrens gemäss Patentanspruch 1

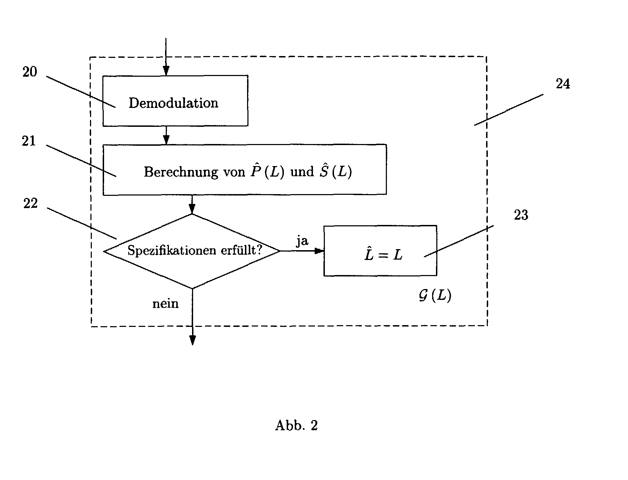

Abb. 2   ein Ablaufdiagramm eines Iterationsteilschritts im erfindungsgemässen Verfahren gemäss Patentanspruch 1

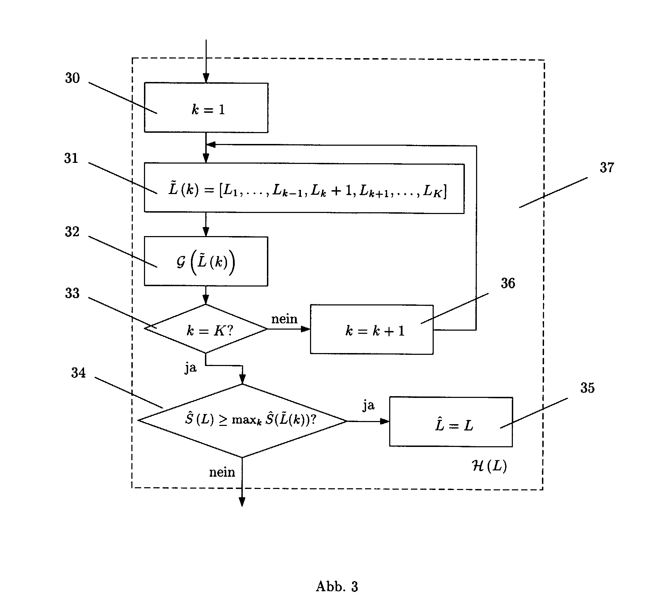

Abb. 3   ein Ablaufdiagramm eines Iterationsschritts im erfindungsgemässen Verfahren gemäss Patentanspruch 1

Abb. 4   ein Ablaufdiagramm des erfindungsgemässen Verfahrens gemäss Patentanspruch 2

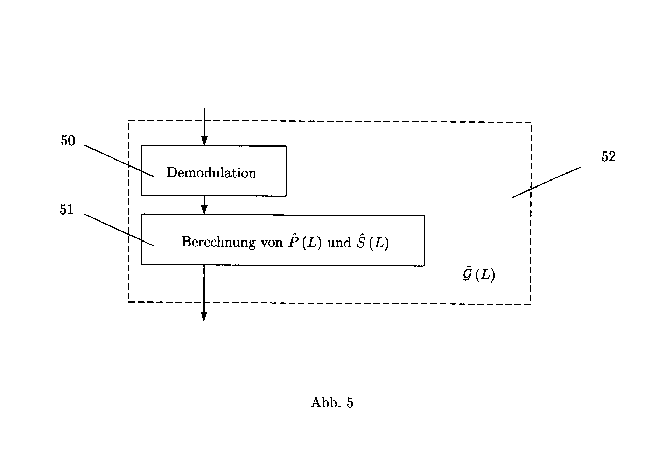

Abb. 5   ein Ablaufdiagramm eines Iterationsteilschritts im erfindungsgemässen Verfahren gemäss Patentanspruch 2

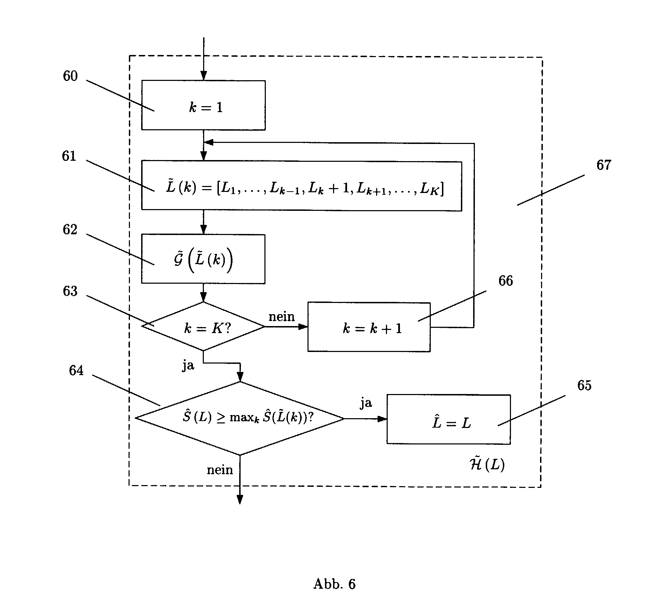

Abb. 6   ein Ablaufdiagramm eines Iterationsschritts im erfindungsgemässen Verfahren gemäss Patentanspruch 2

Abb. 7   ein Blockschaltbild einer Implementierung des erfindungsgemässen Verfahrens gemäss Patentanspruch 4

Abb. 8   ein Blockschaltbild einer Implementierung des SAGE-Algorithmus

Abb. 9   ein Blockschaltbild einer Implementierung des Multistage-Algorithmus

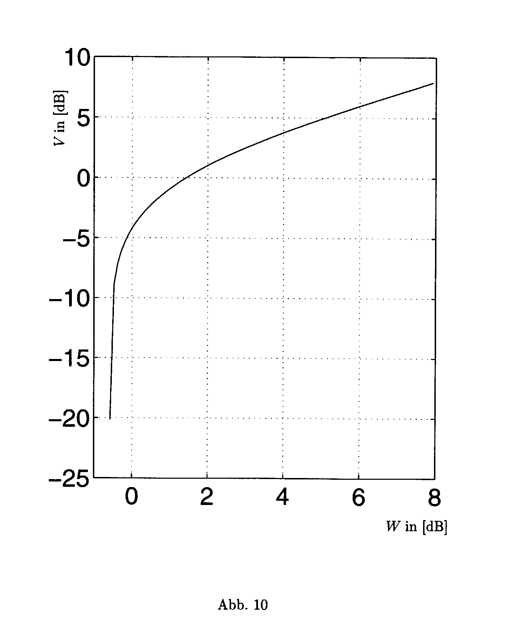

Abb. 10   eine Kennlinie zur Schätzung des Störabstands der Entscheidungsvariablen.

**Wege zur Ausführung der Erfindung**

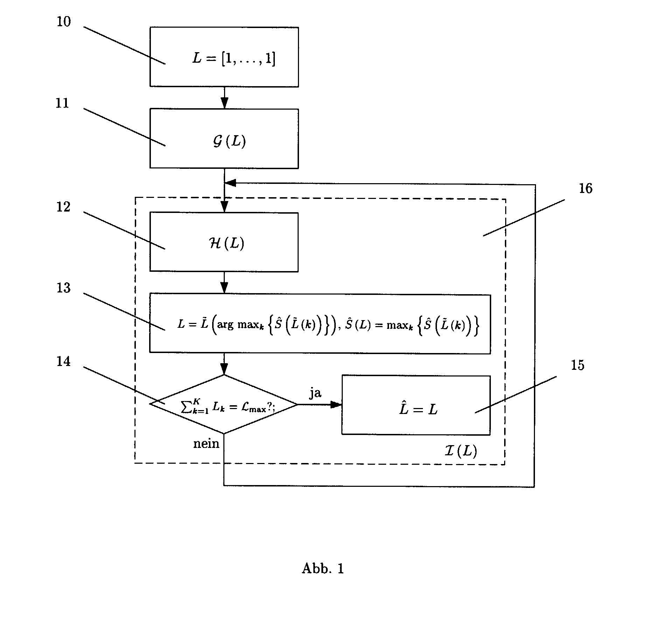

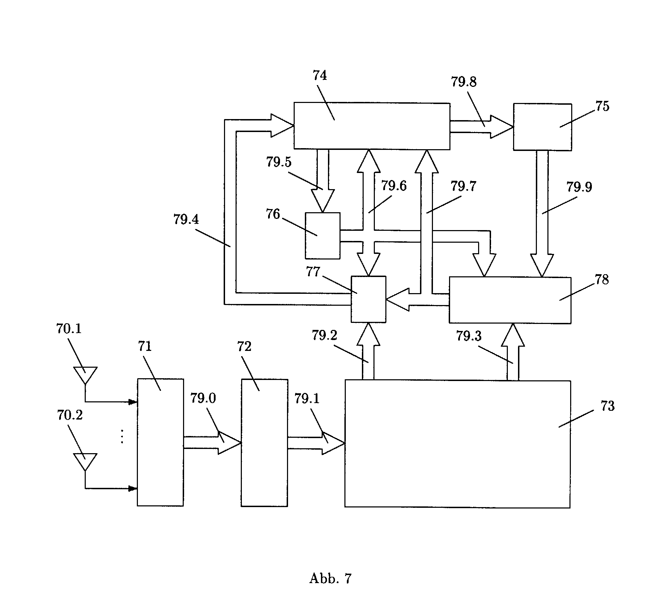

Das in Abb. 1 dargestellte Ablaufdiagramm wird im Rechenwerk 76 als Computerprogramm auf einem digitalen Signalprozessor implementiert. Die im Iterationsteilschritt $\varsigma(L)$ 24 erforderliche Demodulation des Empfangssignals erfolgt gemäss dem Blockschaltbild in Abb. 7. Die Ausgangssignale der $M$ Antennen 70.1 ... 70.2 werden in dem Rechenwerk 71 ins Basisband gemischt und an die Eingänge von Filtern 72 gelegt, die dem Chipsignal angepasst sind. Die Filterausgänge werden mit einer Frequenz von zwei bis vier Werten pro Chipdauer abgetastet und die pro Abtastzeitpunkt anfallenden 2M Inphasen- und Quadraturkomponenten in eine vektorielle Verzögerungsleitung 73 geführt. Die Länge der Verzögerungsleitung wird derart gewählt, dass das Empfangssignal über insgesamt P Symboldauern beobachtet werden kann. Die Grösse P hängt von der Kohärenzzeit des Kanals und der Leistungsfähigkeit des im Empfänger eingesetzten Rechenwerks ab. Für $L = [1,...,1]$ erfolgt eine Initialisierung der Pfadparameterschätzungen im Rechenwerk 78. In den Korrelatoren 77 werden die zuletzt beobachteten Werte der Verzögerungsleitung unter Verwendung der geschätzten Pfadparameter, die am Ausgang des Rechenwerks 79.7 zur Verfügung stehen, mit den Spreizsequenzen der einzelnen Kanäle korreliert. Am Ausgang 79.4 der Korrelatoren 77 ergeben sich insgesamt $\sum^{K}_{k=1} L_k$ Komponenten, welche im Multistage-Detektor 74 zur Detektion der übertragenen Symbole dienen. Das K-dimensionale Ausgangssignal 79.8 des Multistage-Detektors enthält die detektierten Symbole der K Kanäle, die in eine vektorielle Verzögerungsleitung 75 geführt werden. Unter Verwendung der detektierten Symbole und der entsprechenden Beobachtung des Empfangssignals 79.3 erfolgt im Rechenwerk 78 eine Aufdatierung der geschätzten Pfadparameter aller Kanäle. Im Iterationsteilschritt $\varsigma(L)$ 24 mit $L \neq [1,...,1]$ erfolgen die Aufdatierung der geschätzten Pfadparameter und die Detektion der übertragenen Symbole mit Hilfe der in der Verzögerungsleitung 73 gespeicherten Werte. Somit ist keine erneute Mischung und signalangepasste Filterung erforderlich. Falls nach Abschluss der Demodulation für eine gegebene Systemordnung L keine Abbruchbedingung erfüllt ist, bilden die Pfadparameterschätzungen die Initialwerte der entsprechenden Grössen für die nachfolgende Demodulation. Die für die Schätzung der Bitfehlerraten 21 gemäss Anspruch 4 erforderlichen Entscheidungsvariablen der Inphasen- und Quadraturkomponenten 79.5 werden von dem Rechenwerk 74 zur Verfügung gestellt. Der in den Rechenwerken 74, 77 und 78 für die Demodulation benötigte Wert $L$ bildet das Ausgangssignal 79.6 des Rechenwerks 76.

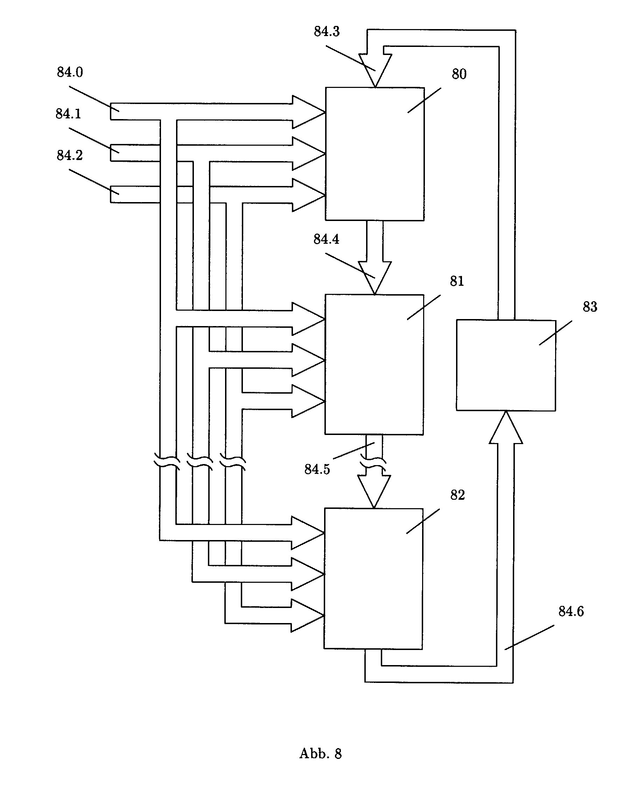

Ein Blockschaltbild des Rechenwerks, welches den SAGE-Algorithmus implementiert, ist in Abb. 8 dargestellt. Die Eingangssignale 84.0, 84.1 bzw. 84.2 enthalten eine Beobachtung des Empfangssignals, die detektierten Daten bzw. den Wert $L$. In der Recheneinheit 80 erfolgt die Rekonstruktion des Signalanteils im ersten Pfad des ersten Kanals und eine Aufdatierung der Parameterschätzungen dieses Pfads. Die Leitung 84.4 enthält die aufdatierten Pfadparameter sowie eine Schätzung des Rauschanteils im Empfangssignal. Falls $L_1 > 1$ gilt, erfolgt in der Recheneinheit 81 die Rekonstruktion des Signalanteils im zweiten Pfad des ersten Kanals und eine Aufdatierung der Parameterschätzungen dieses Pfads. Für $L_1 = 1$ erfolgen stattdessen in 81 die entsprechenden Operationen für den ersten Pfad des zweiten Kanals. Die Leitung 84.5 enthält wiederum die aufdatierten Pfadparameter sowie eine Schätzung des Rauschanteils im Empfangssignal. Nach Aufdatierung der geschätzten Parameter des letzten Pfades des Kanals $K$ in der Recheneinheit 82 werden die Parameterschätzungen und die Schätzung des Rauschanteils im Empfangssignal über das Verzögerungsglied 83 der Recheneinheit 80 zugeführt und stehen somit für die nachfolgende Demodulation zur Verfügung.

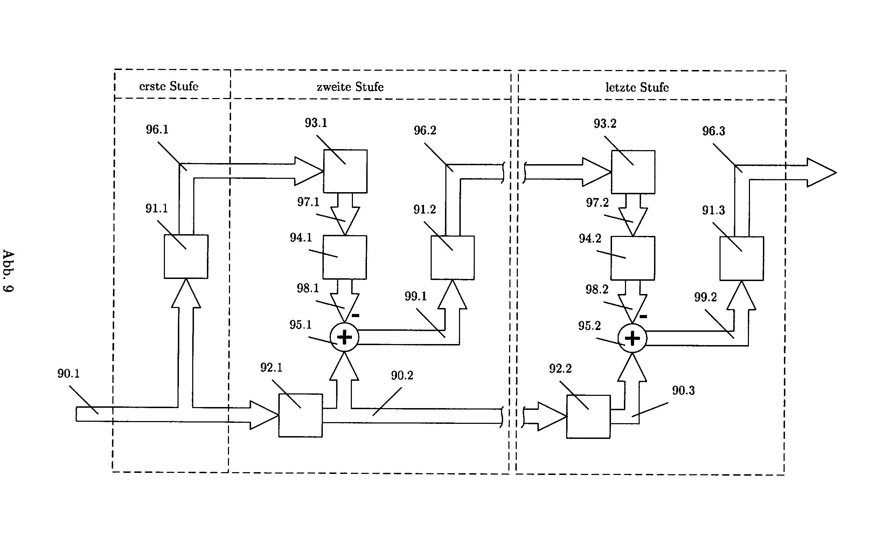

Ein Blockschaltbild des Rechenwerks, welches den Multistage-Algorithmus implementiert, ist in Abb. 9 dargestellt. Die Ausgangssignale 90.1 der Korrelatoren werden einerseits der Verzögerungsleitung 92.1 und andererseits der Recheneinheit 91.1 zugeführt, in der die Signalanteile der einzelnen Pfade kohärent kombiniert und anschliessend die übertragenen Symbole detektiert werden. Die Länge der Verzögerungsleitung 93.1 ist derart gewählt, dass die im Signal 90.2 enthaltenen Intersymbol- als auch Mehrfachzugriffsinterferenzterme von der Recheneinheit 94.1 rekonstruiert und im Addierer 95.1 subtrahiert werden können. Wie in der ersten Stufe des Detektors erfolgt in der Recheneinheit 91.2 eine erneute Kombination und Detektion. Es lassen sich mehrere Stufen, wie in Abb. 9 dargestellt, kaskadieren, wobei in jeder Stufe jeweils eine Interferenzrekonstruktion und -subtraktion und eine erneute Detektion der Symbole erfolgen. Das Ausgangssignal der letzten Stufe, welches die endgültigen Symbolschätzungen enthält, wird über die Leitung 96.3 der Verzögerungsleitung 75 zugeführt.

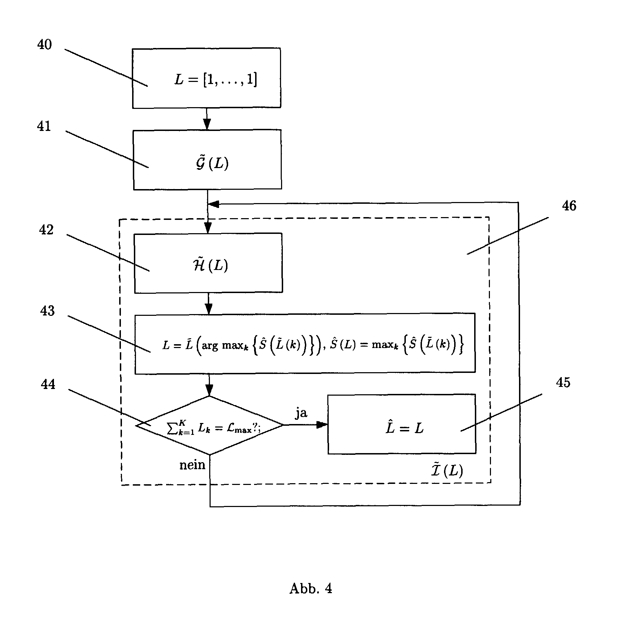

Das in Abb. 4 dargestellte Ablaufdiagramm wird ebenfalls im Rechenwerk 76 als Computerprogramm auf einem digitalen Signalprozessor implementiert. Die Demodulation im Iterationsteilschritt $\tilde{\varsigma}\ (L)$ wird wie im Iterationsteilschritt $\varsigma\ (L)$ implementiert, so dass die Struktur des Empfängers gemäss Abb. 7 mit den oben beschriebenen Funktionsweisen der einzelnen Blöcke erhalten bleibt.

**Bezugszeichenliste:**

10
Wertzuweisung
11
Iterationsteilschritt
12
Iterationsschritt
13
Wertzuweisung
14
Vergleich
15
Wertzuweisung
16
Iteration

20
Demodulation
21
Berechnung
22
Vergleich
23
Wertzuweisung
24
Iterationsteilschritt

30
Wertzuweisung
31
Wertzuweisung
32
Iterationsteilschritt
33
Vergleich
34
Vergleich
35
Wertzuweisung
36
Wertzuweisung
37
Iterationsschritt

40
Wertzuweisung
41
Iterationsteilschritt
42
Iterationsschritt
43
Wertzuweisung
44
Vergleich
45
Wertzuweisung
46
Iteration

50
Demodulation
51
Berechnung
52
Iterationsteilschritt

60
Wertzuweisung

61
Wertzuweisung
62
Iterationsteilschritt
63
Vergleich
64
Vergleich
65
Wertzuweisung
66
Wertzuweisung
67
Iterationsschritt

70.1, 70.2
Antennen
71
Mischer und Bandpassfilter
72
Signalangepasste Filterung und Abtastung
73
Verzögerungsleitung

74
Rechenwerk zur Symboldetektion
75
Verzögerungsleitung
76
Rechenwerk zur Systemordnungsschätzung
77
Korrelatoren
78
Rechenwerk zur Pfadparameterschätzung
79.0... 79.9
Leitungen
80 ... 82
Rechenwerke zur Pfadparameterschätzung
83
Verzögerungselement
84.0 ... 84.6
Leitungen

90.1 ... 90.3
Leitungen
91.1 ... 91.3
Rechenwerke zur Kombination der Mehrwegkomponenten und Detektion
92.1, 92.2
Verzögerungsleitungen
93.1, 93.2
Verzögerungsleitungen
94.1, 94.2
Rechenwerk zur Interferenzrekonstruktion
95.1, 95.2
Addierer

96.1 ... 96.3

Leitungen
97.1, 97.2
Leitungen
98.1, 98.2
Leitungen

**Patentansprüche**

1. Verfahren zur Schätzung der Systemordnung in einem mit $\mathcal{L}_{\max} \geq K + 1$ Korrelatoren ausgerüsteten Empfänger eines Funksystems mit Bandspreiztechnik, in dem $K$ logische Kanäle auf $K$ physikalische Kanäle abgebildet werden, die mittels verschiedener Spreizcodes mit Phasenumtastung im Codevielfachzugriff auf ein gemeinsames Frequenzband zugreifen, in Form der iterativen Bestimmung (10, 11, 16) eines Vektors

$$\hat{L} = \left[ \hat{L}_1, \ldots, \hat{L}_K \right],$$

dessen $k$-te Komponente die Anzahl der relevanten Wellenausbreitungspfade für den $k$-ten Kanal angibt,

**gekennzeichnet durch die folgenden Merkmale:**

(a) ein Iterationsteilschritt $\mathcal{G}(L)$ (24) besteht aus der Demodulation der Signale aller Kanäle unter Verwendung von $L = [L_1, \ldots, L_K]$ im Rahmen eines Mehrbenutzerverfahrens mit Subtraktion der Intersymbol- und Vielfachzugriffsinterferenz, der Schätzung der entsprechenden Bitfehlerraten

$$\hat{P}(L) = \left[ \hat{P}_1, \ldots, \hat{P}_K \right]$$

innerhalb eines bestimmten Ausschnitts des Empfangssignals, dem Vergleich von $P(L)$ mit spezifizierten Bitfehlerraten und der Berechnung und Speicherung einer von $\hat{P}(L)$ abhängigen unteren Schranke $S(L)$ für die Wahrscheinlichkeit, dass der Vektor der geschätzten Symbole aller Kanäle dem Vektor der tatsächlich übertragenen Symbole entspricht;

(b) das Verfahren bricht in einem Iterationsteilschritt $\mathcal{G}(L)$ ab, sobald die spezifizierten Bitfehlerraten eingehalten werden, und liefert als Schätzung $\hat{L} = L$;

(c) ein Iterationsschritt $\mathcal{H}(L)$ (37) besteht aus einer Folge von Iterationsteilschritten

$$\left\{ \mathcal{G}\left( \bar{L}(1) \right), \ldots, \mathcal{G}\left( \bar{L}(K) \right) \right\}$$

mit $\tilde{L}(k) = [L_1,..,L_{k-1},L_k+1,L_{k+1},...,L_K]$ und dem Vergleich von $S(L)$ mit

$$\hat{S}\left(\tilde{L}(k)\right)$$

für $k = 1,..., K$;

(d) falls in den Iterationsteilschritten

$$\left\{\mathcal{G}\left(\tilde{L}(1)\right),\ldots,\mathcal{G}\left(\tilde{L}(K)\right)\right\}$$

keine Abbruchbedingungen erfüllt sind, bricht das Verfahren im Iterationsschritt $\mathcal{H}(L)$ ab, falls $S(L) \geq \max_k$

$$\hat{S}\left(\tilde{L}(k)\right)$$

erfüllt ist, und liefert als Schätzung $\hat{L} = L$;

(e) eine Iteration $\mathcal{I}(L)$ (16) besteht aus einem Iterationsschritt $\mathcal{H}(L)$, den Aufdatierungen

$$L = \tilde{L}\left(\arg\max_k\left\{\hat{S}\left(\tilde{L}(k)\right)\right\}\right)$$

und

$$\hat{S}(L) = \max_k\left\{\hat{S}\left(\tilde{L}(k)\right)\right\},$$

und dem Vergleich von

$$\sum_{k=1}^{K} L_k$$

mit $\mathcal{L}_{\mathbf{max}}$;

(f) falls im Iterationsschritt $\mathcal{H}(L)$ keine Abbruchbedingung erfüllt ist, bricht das Verfahren in der Iteration $\mathcal{I}(L)$ ab, falls

$$\sum_{k=1}^{K} L_k = \mathcal{L}_{\mathbf{max}}$$

erfüllt ist, und liefert als Schätzung $\hat{L} = L$; (g) mit dem Startwert $L = [1,...,1]$ wird der Iterationsteilschritt $\mathcal{G}(L)$ berechnet und, falls die Abbruchbedingung nicht erfüllt ist, eine Folge von Iterationen $\{\mathcal{I}(L)\}$ durchgeführt, bis das Verfahren abbricht;

2. Verfahren zur Schätzung der Systemordnung in einem mit $\mathcal{L}_{\mathbf{max}} \geq K + 1$ Korrelatoren ausgerüsteten Empfänger eines Funksystems mit Bandspreiztechnik, in dem $K$ logische Kanäle auf $K$ physikalische Kanäle abgebildet werden, die mittels verschiedener Spreizcodes mit Phasenumtastung im Codevielfachzugriff auf ein gemeinsames Frequenzband zugreifen, in Form der iterativen Bestimmung (40, 41, 46) eines Vektors

$$\hat{L} = \left[\hat{L}_1,\ldots,\hat{L}_K\right],$$

dessen $k$-te Komponente die Anzahl der relevanten Wellenausbreitungspfade für den $k$-ten Kanal angibt,
**gekennzeichnet durch die folgenden Merkmale:**

(a) ein Iterationsteilschritt $\hat{\mathcal{G}}(L)$ (52) besteht aus der Demodulation der Signale aller Kanäle unter Verwendung von $L = [L_1,..., L_K]$ im Rahmen eines Mehrbenutzerverfahrens mit Subtraktion der Intersymbol- und Vielfachzugriffsinterferenz, der Schätzung der entsprechenden Bitfehlerraten

$$\hat{P}(L) = \left[\hat{P}_1,\ldots,\hat{P}_K\right]$$

innerhalb eines bestimmten Ausschnitts des Empfangssignals und der Berechnung und Speicherung einer von $P(L)$ abhängigen unteren Schranke $S(L)$ für die Wahrscheinlichkeit, dass der Vektor der geschätzten Symbole aller Kanäle dem Vektor der tatsächlich übertragenen Symbole entspricht;

(b) ein Iterationsschritt $\tilde{\mathcal{H}}(L)$ (67) besteht aus einer Folge von Iterationsteilschritten

$$\left\{\tilde{\mathcal{G}}\left(\tilde{L}(1)\right),\ldots,\tilde{\mathcal{G}}\left(\tilde{L}(K)\right)\right\}$$

mit $\tilde{L}(k) = [L_1,..,L_{k-1},L_k+1,L_{k+1},...,L_K]$ und dem Vergleich von $S(L)$ mit

$$\hat{S}\left(\tilde{L}(k)\right)$$

für $k = 1,...,K$;

(c) das Verfahren bricht im Iterationsschritt $\tilde{\mathcal{H}}(L)$ ab, falls $S(L) \geq \max_k$

$$\hat{S}\left(\tilde{L}(k)\right)$$

erfüllt ist, und liefert als Schätzung $\hat{L} = L$;

(d) eine Iteration $\tilde{\mathcal{I}}(L)$ (46) besteht aus einem

Iterationsschritt $\tilde{\mathcal{H}}(L)$, den Aufdatierungen

$$L = \bar{L}\left(\arg\max_k\left\{\hat{S}\left(\bar{L}(k)\right)\right\}\right)$$

und

$$\hat{S}(L) = \max_k\left\{\hat{S}\left(\bar{L}(k)\right)\right\},$$

und dem Vergleich von

$$\sum_{k=1}^{K} \grave{L}_k$$

mit $\mathcal{L}_{\max}$;

(e) falls im Iterationsschritt $\tilde{\mathcal{H}}(L)$ keine Abbruchbedingung erfüllt ist, bricht das Verfahren in der Iteration $\tilde{\mathcal{I}}(L)$ ab, falls

$$\sum_{k=1}^{K} L_k = \mathcal{L}_{\max}$$

erfüllt ist, und liefert als Schätzung $\hat{L} = L$;

(f) mit dem Startwert $L = [1,...,1]$ wird der Iterationsteilschritt $\hat{\vartheta}(L)$ berechnet und eine Folge von Iterationen

$$\left\{\tilde{\mathcal{I}}(L)\right\}$$

durchgeführt, bis das Verfahren abbricht;

3. Verfahren gemäss Anspruch 1 oder Anspruch 2 für die mit einer Gruppe von $M \geq 1$ Antennen ausgerüstete Basisstation in einem DS-CDMA-Funksystem mit binärer Phasenumtastung der Spreizcodes und Symbole in den Inphasen- und Quadraturkomponenten der Trägersignale dadurch gekennzeichnet, dass ein SAGE-Algorithmus (78) zur Schätzung der Pfadparameter und ein Multistage-Algorithmus (74) mit anschliessendem Maximum-Ratio-Combining der Mehrwegkomponenten zur Berechnung der Entscheidungsvariablen der Inphasen- und Quadraturkomponenten aller Kanäle dienen, die für gegebene Symbolwerte als voneinander unabhängige reelle normalverteilte Zufallsvariablen modelliert werden;

4. Verfahren gemäss Anspruch 3 und der Schätzung der Bitfehlerraten aller Kanäle in den Inphasen- und Quadraturkomponenten, **gekennzeichnet durch die folgenden Merkmale:**

(a) es erfolgt eine Berechnung des Betrags $w = |v|$ der reellen Entscheidungsvariabeln $v$ für insgesamt $N$ Symbole mit $N \geq 100$;

(b) es erfolgen eine Berechnung der Grösse $W = 0.5m^2/s^2$, wobei $m$ und $s$ den Mittelwert und die Standardabweichung von $w$ angeben, eine Schätzung des Störabstands als Ordinatenwert $V$ der Kennlinie (100) mit dem Abzissenwert $W$ und die Berechnung der Bitfehlerrate $P = 0.5\,\mathrm{erfc}\,(\sqrt{V})$, wobei $\mathrm{erfc}\,(\cdot)$ die komplementäre Fehlerfunktion angibt;

5. Verfahren gemäss Anspruch 4 dadurch gekennzeichnet, dass die untere Schranke $S$ durch

$$\hat{S} = 1 - \sum_{k=1}^{K} \hat{P}_k$$

berechnet wird;

6. Verfahren gemäss Anspruch 4 dadurch gekennzeichnet, dass die untere Schranke $S$ durch

$$\hat{S} = 1 - K\max_k\left\{\hat{P}_k\right\}$$

berechnet wird;

10

$$L = [1, \ldots, 1]$$

11

$$\mathcal{G}(L)$$

16

12

$$\mathcal{H}(L)$$

13

$$L = \tilde{L}\left(\arg\max_k\left\{\hat{S}\left(\tilde{L}(k)\right)\right\}\right),\ \hat{S}(L) = \max_k\left\{\hat{S}\left(\tilde{L}(k)\right)\right\}$$

14

$$\sum_{k=1}^{K} L_k = \mathcal{L}_{\max}?;$$

ja

15

$$\hat{L} = L$$

nein

$$\mathcal{I}(L)$$

Abb. 1

Abb. 2

30

31

32

33

34

35

36

37

$$k = 1$$

$$\tilde{L}(k) = [L_1, \ldots, L_{k-1}, L_k + 1, L_{k+1}, \ldots, L_K]$$

$$\mathcal{G}\left(\tilde{L}(k)\right)$$

$$k = K?$$

nein

$$k = k + 1$$

ja

$$\hat{S}(L) \geq \max_k \hat{S}(\tilde{L}(k))?$$

ja

$$\hat{L} = L$$

$$\mathcal{H}(L)$$

nein

Abb. 3

40 $L = [1, \ldots, 1]$

41 $\tilde{\mathcal{G}}(L)$

46

42 $\tilde{\mathcal{H}}(L)$

43 $L = \hat{L}\left(\arg\max_k\left\{\hat{S}\left(\tilde{L}(k)\right)\right\}\right), \hat{S}(L) = \max_k\left\{\hat{S}\left(\tilde{L}(k)\right)\right\}$

44 $\sum_{k=1}^{K} L_k = \mathcal{L}_{\max}?;$

ja

45 $\hat{L} = L$

nein

$\tilde{\mathcal{I}}(L)$

Abb. 4

50

Demodulation

51

Berechnung von $\hat{P}(L)$ und $\hat{S}(L)$

52

$\check{\mathcal{G}}(L)$

Abb. 5

Abb. 6

Abb. 7

Abb. 8

Abb. 9

Abb. 10